# EUROPEAN PATENT APPLICATION

(11) **EP 4 303 688 A1**
(43) Date of publication of application: **10.01.2024**
(21) Application number: 22183903.8
(22) Date of filing: 08.07.2022
(51) Int. Cl.: G05D 23/24, A45D 2/00, H05B 3/00

(54) **CONTROLLING OPERATION OF A HEATER OF A HAIR STYLING DEVICE**

(71) Applicant: Koninklijke Philips N.V., 5656 AG Eindhoven (NL)
(72) Inventor: PANG, Chuen Yu Cyrus, Eindhoven (NL)
(74) Representative: Philips Intellectual Property & Standards

(57) **Abstract**

In a hair styling device (100) which is of the type comprising a functional module (20) having a functional surface (22) for interaction with hair, a heater, and a controller (50), the controller (50) is configured to apply a feedback control algorithm designed to operate the heater to realize a functional temperature of the functional surface (22) of the functional module (20). The heater comprises material of which electrical resistance changes with temperature, and the feedback control algorithm involves a repeated sequence of the following actions: obtaining a control input value by performing a measurement of real-time electrical resistance of said material of the heater, determining a difference value by comparing the control input value to a reference value related to the functional temperature of the functional surface (22) of the functional module (20), and adjusting operation of the heater to minimize the difference value.

## Description

### FIELD OF THE INVENTION

The invention relates to a hair styling device, comprising a functional module having a functional surface for interaction with hair, a heater configured to heat at least the functional surface of the functional module, and a controller configured to control operation of the heater, wherein the controller is configured to apply a feedback control algorithm designed to operate the heater to realize a functional temperature of the functional surface of the functional module.

### BACKGROUND OF THE INVENTION

A practical example of a hair styling device is a hair curler. Generally speaking, a hair curler is a handheld electronic device comprising a handle, a curling barrel as the functional module of the device, including a tube-shaped element for the hair to be wound about, and a heater configured to heat at least an exterior surface of the tube-shaped element. Usually, the heater is a Positive Temperature Coefficient (PTC) heater which is mounted at a central position in the tube-shaped element by means of a rather bulky mounting bracket. The resultant assembly of the tube-shaped element and the heater has a big thermal mass, which is disadvantageous when it comes to the heat-up and cool-down performance of the hair curler. The fact that heat transfer from the PTC heater in the center of the tube-shaped element to the exterior surface of the tube-shaped element through the mounting bracket is indirect is another factor which reduces the heat-up and cool-down performance of the hair curler. Further, due to an irregular shape of the mounting bracket, the heat-up time of the tube-shaped element is slow and uneven.

The hair curler normally comprises a microprocessor as a controller for controlling operation of the hair curler. A main functionality of the microprocessor is controlling the temperature of the exterior surface of the tube-shaped element of the curling barrel. In view thereof, the hair curler is further equipped with an internal temperature sensor configured to provide input which is representative of an actual temperature of the exterior surface of the tube-shaped element to the microprocessor. During hair curling, hair is imposing a load onto the tube-shaped element, which causes the temperature of the exterior surface of the tube-shaped element to drop. Once the internal temperature sensor detects a temperature drop, it will signal the microprocessor to start powering up the heater. The sensor response takes a few seconds. After that, because of the long heat-up time, it will take a few seconds before the temperature of the exterior surface of the tube-shaped element starts to increase, and it will take a few more seconds to reach the desired temperature. Thus, a person using the hair curler will notice that styling time is rather long, and will therefore perceive the way in which the hair curler operates as being ineffective.

It is an object of the invention to develop a new design of a hair styling device such as a hair curler, particularly a new design in which the heating-up time can be reduced compared to conventional situations, whereby it is possible to better maintain a temperature setting of the functional surface of the functional module of the hair styling device.

### SUMMARY OF THE INVENTION

The invention provides a hair styling device, comprising a functional module having a functional surface for interaction with hair, a heater configured to heat at least the functional surface of the functional module, and a controller configured to control operation of the heater, wherein:
- the controller is configured to apply a feedback control algorithm designed to operate the heater to realize a functional temperature of the functional surface of the functional module,
- the heater comprises material of which electrical resistance changes with temperature, and
- the feedback control algorithm involves a repeated sequence of the following actions:
   - obtaining a control input value by performing a measurement of real-time electrical resistance of said material of the heater,
   - determining a difference value by comparing the control input value to a reference value related to the functional temperature of the functional surface of the functional module, and
   - adjusting operation of the heater to minimize the difference value.

It follows from the above definition that in the hair styling device according to the invention, controlling operation of the heater does not require the use of a temperature sensor, because information about electrical resistance of material of the heater is used in the process. The fact is that the nature of the material is such that the electrical resistance and the temperature of the material are related to each other. Thus, the electrical resistance can be taken as a measure of the temperature of the material and thereby of the temperature of the functional surface of the functional module. In the context of the invention, any suitable way of measuring the real-time electrical resistance of the material of the heater can be applied.

It is to be noted that in practical cases, controlling operation of the heater is done by setting a level of electric power supply to the heater. Hence, in such cases, the action of adjusting operation of the heater involved in the feedback control algorithm is an action of adjusting the level of electric power supply to the heater.

The invention covers both hair styling devices in which one and the same functional temperature of the functional surface of the functional module is to be realized under all circumstances and hair styling devices in which the functional temperature can be varied, automatically and/or by a person using the hair styling device. In respect of the latter option, it is noted that in an embodiment, the hair styling device comprises a user interface configured to enable a person using the hair styling device to provide input to the controller which determines the functional temperature of the functional surface of the functional module. The user interface may be configured so as to enable the person to directly vary the temperature setting, or to indirectly vary the temperature setting, such as by choosing one of several modes of operation, wherein at least two of the modes of operation may be different at least as far as the temperature setting of the functional surface of the functional module is concerned. It is possible that the controller is configured to set one of a discrete number of functional temperatures of the functional surface of the functional module in dependence on input received through the user interface. On the other hand, there is a possibility of the person using the hair styling device being enabled to set the functional temperature in a continuously variable fashion.

According to an advantageous option, the heater is a thick film heater including a heater track made of electrically resistive material. The heater track can have any suitable shape, wherein in some cases, it may be useful to have some kind of zigzag-shape of the heater track. The thick film heater can be shaped in such a way that transfer of heat from the thick film heater to the functional surface of the functional module can take place in an efficient fashion, with even distribution of the heat. Thick film heaters are generally known for their low thermal mass and fast heat-up properties, and use of a thick film heater in the hair styling device can therefore help improve styling performance, wherein the hair temperature can be maintained at a steadier level so that styling time can be decreased. The thick film heater is very well suitable for the heater resistance control explained in the foregoing, and combining the fast heat-up time of the thick film heater with the fast response of the heater resistance control to a temperature drop at the functional surface of the functional module results in optimal compensation of heat loss following from actual interaction of the functional surface with hair during a styling action. The material of the heater track may include a mixture of metal and glass powders and oxides and bonding solvents, for example, which does not alter the fact that other options are covered by the invention as well. A practical example of the metal is a copper-based metal, and a practical example of the glass powders is glass powders with bismuth(III) oxide.

It is practical if the thick film heater includes a carrier on which at least the heater track is arranged. Such a carrier may comprise a sheet, which allows for adapting the shape of the thick film heater to the appearance of the functional module of the hair styling device. For example, it may be so that the functional module includes a tube-shaped element, and that the functional surface of the functional module comprises at least a portion of an exterior surface of the tube-shaped element. This may be applicable to the context of a hair curler, for example, comprising a curling barrel as functional module, in which case the tube-shaped element is a main element of the curling barrel, around which the hair is to be wound during a curling action. In such a case, it is advantageous if the sheet of the carrier of the thick film heater is bent to a tube having a longitudinal slot, and if the thick film heater is fitted inside the tube-shaped element of the functional module. During the assembly process of the hair styling device, the thick film heater can be inserted in the tube-shaped element in a compressed state so that it is achieved that the thick film heater automatically settles inside the tube-shaped element, the longitudinal slot of the bent sheet of the carrier of the thick film heater opening further in the process until an exterior surface of the thick film heater abuts against an interior surface of the tube-shaped element. Examples of material of the carrier include stainless steel and various types of ceramic material.

Besides the heating track and the carrier, further elements can be present in the thick film heater, such as a dielectric insulation film at a position between the heating track and the carrier, electrically conductive contact pads on the heater track, or a conductor track made of conductive material, for enabling application of voltage onto the heater track, and an insulation protective layer for mechanical protection of the heater track.

For reasons of safety of use of the hair styling device, it is practical if the hair styling device comprises a thermal fuse which is configured to assume one of a default condition of enabling electric power supply to the heater and a safety condition of disabling electric power supply to the heater. In the above-mentioned case of the functional module including a tube-shaped element and the thick film heater being arranged inside the tube-shaped element, conformed to the shape of the interior surface of the tube-shaped element, it is possible to use a spring-loaded holder for pushing the thermal fuse against an interior surface of the thick film heater, wherein optionally the thermal fuse is attached to the holder, such as through a quantity of suitable glue. It may be practical for the spring-loaded holder to be generally U-shaped, in which case the holder has legs which can resiliently settle against the interior surface of the thick film heater.

As suggested earlier, the hair styling device according to the invention may be a hair curler comprising a curling barrel as functional module, wherein the curling barrel includes a tube-shaped element for the hair to be wound about. That does not alter the fact that many other types of hair styling devices are covered by the invention as well. The indication that the functional surface of the functional module serves for interaction with hair does not necessarily mean that the functional surface is intended to contact the hair, although this is a practical and effective option for realizing transfer of heat from the functional surface to the hair.

Independent from the concept of controlling operation of the heater of the hair styling device on the basis of input following from a measurement of real-time electrical resistance of material of the heater, the invention relates to a hair styling device, comprising a functional module having a functional surface for interaction with hair, and a heater configured to heat at least the functional surface of the functional module, wherein:
- the functional module includes a tube-shaped element, and the functional surface of the functional module comprises at least a portion of an exterior surface of the tube-shaped element,
- the heater is a thick film heater including a heater track made of electrically resistive material,
- the thick film heater includes a carrier on which at least the heater track is arranged, and
- the carrier of the thick film heater comprises a sheet which is bent to a tube having a longitudinal slot, wherein the thick film heater is fitted inside the tube-shaped element of the functional module.

Aspects described in the foregoing are equally applicable, either alone or in combination, particularly:
a) the thick film heater includes a conductor track made of conductive material, which conductor track is arranged and configured to enable application of voltage onto the heater track, and
b) the hair styling device comprises a thermal fuse which is configured to assume one of a default condition of enabling electric power supply to the thick film heater and a safety condition of disabling electric power supply to the thick film heater, and a spring-loaded holder arranged and configured to push the thermal fuse against an interior surface of the thick film heater, wherein optionally the spring-loaded holder is generally U-shaped.

The invention also independently relates to a hair curler comprising a curling barrel and a heater, wherein the curling barrel includes a tube-shaped element for the hair to be wound about, and wherein the heater is a thick film heater including a heater track made of electrically resistive material, which thick film heater is arranged inside the tube-shaped element.

Aspects described in the foregoing are equally applicable, either alone or in combination, as the case may be, particularly:
a) the hair curler comprises a controller configured to control operation of the thick film heater, wherein:
   - the controller is configured to apply a feedback control algorithm designed to operate the thick film heater to realize a functional temperature of an exterior surface of the tube-shaped element of the curling barrel, and
   - the feedback control algorithm involves a repeated sequence of the following actions:
      - obtaining a control input value by performing a measurement of real-time electrical resistance of the electrically resistive material of the heater track of the thick film heater,
      - determining a difference value by comparing the control input value to a reference value related to the functional temperature of the exterior surface of the tube-shaped element, and
      - adjusting operation of the thick film heater to minimize the difference value,
b) the controller is configured to control operation of the thick film heater by setting a level of electric power supply to the thick film heater, wherein the action of adjusting operation of the thick film heater involved in the feedback control algorithm is an action of adjusting the level of electric power supply to the thick film heater,
c) the hair curler comprises a user interface configured to enable a person using the hair curler to provide input to the controller which determines the functional temperature of the exterior surface of the tube-shaped element, wherein optionally the controller is configured to set one of a discrete number of functional temperatures of the exterior surface of the tube-shaped element in dependence on input received through the user interface,
d) the thick film heater includes a conductor track made of conductive material, which conductor track is arranged and configured to enable application of voltage onto the heater track,
e) the thick film heater includes a carrier on which at least the heater track is arranged,
f) the carrier of the thick film heater comprises a sheet which is bent to a tube having a longitudinal slot, wherein the thick film heater is fitted inside the tube-shaped element,
g) the hair curler comprises a thermal fuse which is configured to assume one of a default condition of enabling electric power supply to the thick film heater and a safety condition of disabling electric power supply to the thick film heater, and a spring-loaded holder arranged and configured to push the thermal fuse against an interior surface of the thick film heater, wherein optionally the spring-loaded holder is generally U-shaped.

The above-described and other aspects of the invention will be apparent from and elucidated with reference to the following detailed description of a hair curler comprising a curling barrel and a thick film heater.

### BRIEF DESCRIPTION OF THE DRAWINGS

The invention will now be explained in greater detail with reference to the figures, in which equal or similar parts are indicated by the same reference signs, and in which:
Fig. 1 diagrammatically shows a perspective view of a hair curler according to an embodiment of the invention, comprising a handle, a curling barrel and a heater;
Fig. 2 diagrammatically shows an assembly which is part of the hair curler, and which comprises a tube-shaped element of the curling barrel and the heater; and
Figs. 3-5 diagrammatically show components of the assembly; and
Fig. 6 illustrates the set-up of the heater.

### DETAILED DESCRIPTION OF THE EMBODIMENTS

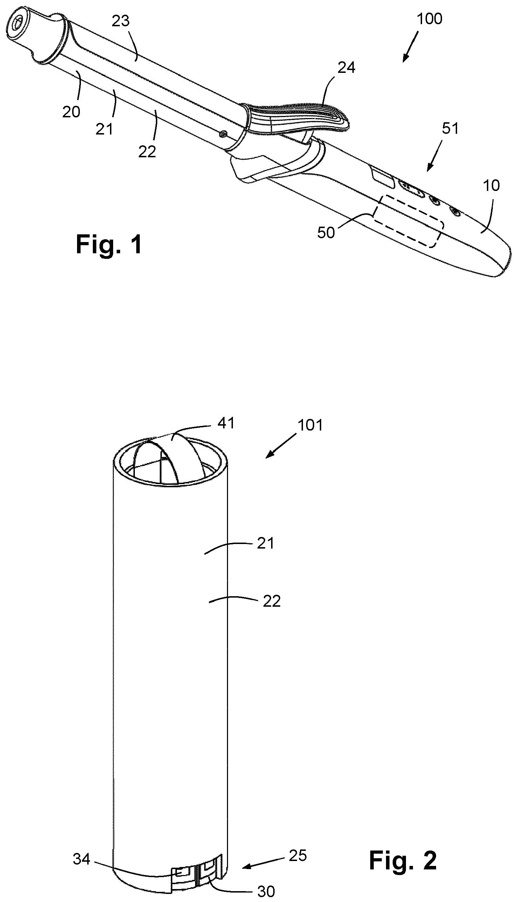

Fig. 1 shows a hair curler 100 according to an embodiment of the invention, as an example of a hair styling device which is within the scope of the invention.

The hair curler 100 is a handheld appliance which is intended to be applied by a person for the purpose of curling her/his hair or someone else's hair. The hair curler 100 comprises a handle 10 for enabling a person to hold the hair curler 100 in her/his hand and a curling barrel 20 including a tube-shaped element 21 for the hair to be wound about. Inside the tube-shaped element 21, a heater 30 is arranged, so that during operation of the hair curler 100, the tube-shaped element 21 is heated, and heat is transferred from an exterior surface 22 of the tube-shaped element 21 to any hair wound about the tube-shaped element 21, so that the intended curling effect on the hair is obtained. According to a practical option, the tube-shaped element 21 is made of aluminium material during an extrusion process.

The hair curler 100 as shown is of the type comprising an elongated hair fixating element 23 extending in longitudinal direction, which is normally in a position of resting on the exterior surface 22 of the tube-shaped element 21, and which can be tilted to an opened position by pressing on a handle portion 24. A person using the hair curler 100 can use the hair fixating element 23 to fixate an initial portion of a strand of hair on the tube-shaped element 21 prior to winding the remainder of the strand of hair about the tube-shaped element 21.

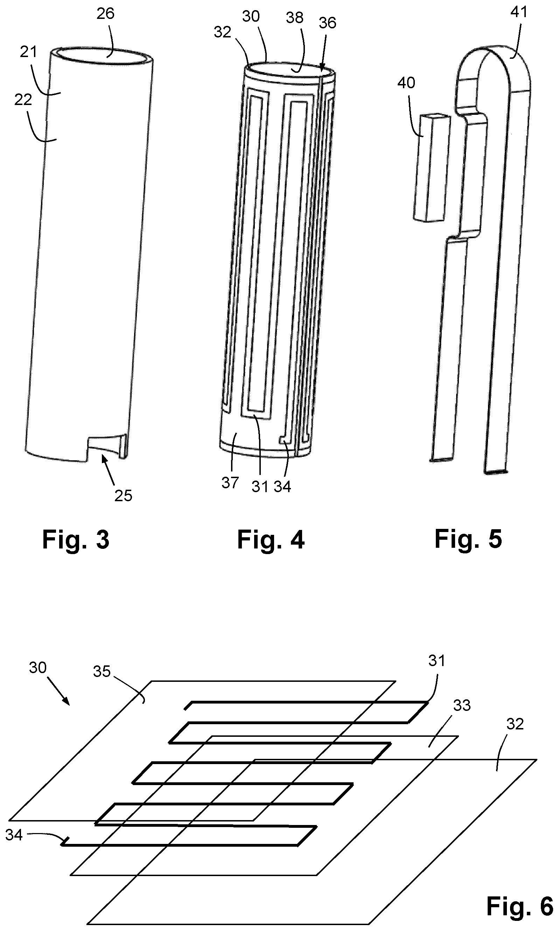

Fig. 2 shows an assembly 101 which is part of the hair curler 100, and which comprises the tube-shaped element 21 of the curling barrel 20 and the heater 30. In Figs. 3-5, components of the assembly 101 are shown. In particular, the tube-shaped element 21 is shown in Fig. 3, the heater 30 is shown in Fig. 4, and a thermal fuse 40 and a holder 41 of the fuse 40 are shown in Fig. 5.

The heater 30 is a thick film heater with low thermal mass and fast heat-up properties. With reference to Fig. 4 and also Fig. 6, it is noted that the heater 30 comprises a heater track 31 made of electrically resistive material, a carrier 32, a dielectric insulation film 33 at a position between the heater track 31 and the carrier 32, electrically conductive contact pads 34 on the heater track 31, and an insulation protective layer 35 for protecting the heater track 31. An example of a suitable material of the contact pads 34 is silver. The contact pads 34 are connected to an electrical power source in the hair curler 100 (not shown), and the heater 30 is operated by applying voltage onto the heater track 31, through the contact pads 34.

In the present example, the carrier 32 comprises a sheet bent to the shape of a tube having a longitudinal slot 36, i.e. bent to a shape in which the sheet has a more or less C-shaped cross-section. An example of a suitable material of the sheet is stainless steel, and preferably, a thickness of the sheet is 1 mm or has a smaller value, such as a value in a range of 0.5 mm to 0.8 mm. The heater track 31, the dielectric insulation film 33, the contact pads 34 and the insulation protective layer 35 are laminated/printed on an exterior surface of the carrier 32, wherein in the present example, the heater track 31 has a zigzag-shape. The heater 30 is arranged inside the tube-shaped element 21, so that the heater 30 and the tube-shaped element 21 form a tube assembly, as it were, with the heater 30 being the inner tube of the tube assembly and the tube-shaped element 21 being the outer tube of the tube assembly. In Figs. 2 and 3, it can be seen that the tube-shaped element 21 is provided with a recess 25 for exposing the contact pads 34 of the heater 30 and thereby enabling connection of the contact pads 34 to the electrical power source, such as through suitable wiring. The longitudinal slot 36 of the bent sheet of the carrier 32 allows the heater 30 to compress and to avoid an interference fit to the tube-shaped element 21 while the compression of the heater 30 can enhance heat transfer between the heater 30 and the tube-shaped element 21, wherein it is possible for an exterior surface 37 of the heater 30 to contact an interior surface 26 of the tube-shaped element 21.

The thermal fuse 40 serves to cut off power to the heater 30 in case of an electronics malfunction, and is glued onto the holder 41. The holder 41 is a spring-loaded holder 41, and is made such that it can spring load itself onto an interior surface 38 of the heater 30. In the present example, the holder 41 is generally U-shaped to that end. An example of a suitable material of the holder 41 is spring steel. When during the assembly process of the hair curler 100, the holder 41 and the thermal fuse 40 as present on the holder 41 are placed inserted in the heater 30, the holder 40 secures itself on the heater 30 with spring force. High viscosity thermal conductive paste can be applied at a position between the thermal fuse 20 and the interior surface 38 of the heater 30, whereby thermal conductivity between the thermal fuse 20 and the heater 30 is enhanced.

The hair curler 100 comprises a microprocessor 50 as a controller for controlling operation of the hair curler 100. A main functionality of the microprocessor 50 is controlling the temperature of the exterior surface 22 of the tube-shaped element 21 of the curling barrel 20. The fact is that the effectiveness of a curling action is related to said temperature. The microprocessor 50 is indicated as a dashed box in Fig. 1. The temperature of the exterior surface 22 of the tube-shaped element 21 of the curling barrel 20 can be controlled by using an electrical resistance property of the heater 30 instead of a separate temperature sensor used in conventional hair curlers. The electrical resistance of the material of the heater track 31 is related to its temperature, in a predictable, fixed way. Therefore, it is possible to measure real-time electrical resistance of the heater track 31 while the heater 30 is being powered, and to use a feedback control algorithm for making adjustments as necessary to realize a temperature setting of the exterior surface 22 of the tube-shaped element 21, according to a relationship between the electrical resistance and the temperature which follows from the properties of the material of the heater track 31 and is further determined by constructional aspects. This way of temperature control is fast, involving considerably shorter response times than when a temperature sensor is used. The advantageous properties of the heater 30, following from the heater 30 being a thick film heater as explained, also contribute to keeping response times as short as possible.

The exact nature of the relationship between the electrical resistance of the heater track 31 and the temperature of the exterior surface 22 of the tube-shaped element 21 can be determined in laboratory tests to be performed on (a test version of) the hair curler 100. The way in which the microprocessor 50 is to be programmed can then be determined on the basis of the outcome of such tests. In that way, it is ensured that a temperature setting can be actually realized and maintained, in an accurate fashion, and under all circumstances during use of the hair curler 100.

The temperature setting of the exterior surface 22 of the tube-shaped element 21 may be a predetermined temperature setting which is always the same, but it is also possible that the temperature setting can be determined by the person using the hair curler 100. Fig. 1 illustrates how the hair curler 100 may be provided with a user interface 51, and it is this user interface 51 which may be configured to enable the person using the hair curler 100 to choose from at least two different temperature settings. A practical example of a range of temperature settings is a range of 130°C to 230°C. Further, it is possible that the user interface 51 is configured to enable the person using the hair curler 100 to set the temperature in the range that is available with increments of 10°C or 20°C.

It will be clear to a person skilled in the art that the scope of the invention is not limited to the examples discussed in the foregoing, and that several amendments and modifications thereof are possible without deviating from the scope of the invention as defined in the attached claims. It is intended that the invention be construed as including all such amendments and modifications insofar they come within the scope of the claims or the equivalents thereof. While the invention has been illustrated and described in detail in the figures and the description, such illustration and description are to be considered illustrative or exemplary only, and not restrictive. The invention is not limited to the disclosed embodiments. The drawings are schematic, wherein details which are not required for understanding the invention may have been omitted, and not necessarily to scale.

Variations to the disclosed embodiments can be understood and effected by a person skilled in the art in practicing the claimed invention, from a study of the figures, the description and the attached claims. In the claims, the word "comprising" does not exclude other steps or elements, and the indefinite article "a" or "an" does not exclude a plurality. Any reference signs in the claims should not be construed as limiting the scope of the invention.

Elements and aspects discussed for or in relation with a particular embodiment may be suitably combined with elements and aspects of other embodiments, unless explicitly stated otherwise. Thus, the mere fact that certain measures are recited in mutually different dependent claims does not indicate that a combination of these measures cannot be used to advantage.

The terms "comprise" and "include" as used in the present text will be understood by a person skilled in the art as covering the term "consist of". Hence, the term "comprise" or "include" may in respect of an embodiment mean "consist of', but may in another embodiment mean "contain/have/be equipped with at least the defined species and optionally one or more other species".

Notable aspects of the invention are summarized as follows. In a hair styling device 100 which is of the type comprising a functional module 20 having a functional surface 22 for interaction with hair, a heater 30 configured to heat at least the functional surface 22 of the functional module 20, and a controller 50 configured to control operation of the heater 30, the controller 50 is configured to apply a feedback control algorithm designed to operate the heater 30 to realize a functional temperature of the functional surface 22 of the functional module 20. The heater 30 comprises material of which electrical resistance changes with temperature, and this aspect of the heater 30 is used to advantage in that the feedback control algorithm involves a repeated sequence of the following actions: obtaining a control input value by performing a measurement of real-time electrical resistance of the material of the heater 30, determining a difference value by comparing the control input value to a reference value related to the functional temperature of the functional surface 22 of the functional module 20, and adjusting operation of the heater 30 to minimize the difference value.

## Claims

1. A hair styling device (100), comprising a functional module (20) having a functional surface (22) for interaction with hair, a heater (30) configured to heat at least the functional surface (22) of the functional module (20), and a controller (50) configured to control operation of the heater (30), wherein:
- the controller (50) is configured to apply a feedback control algorithm designed to operate the heater (30) to realize a functional temperature of the functional surface (22) of the functional module (20),
- the heater (30) comprises material of which electrical resistance changes with temperature, and
- the feedback control algorithm involves a repeated sequence of the following actions:
- obtaining a control input value by performing a measurement of real-time electrical resistance of said material of the heater (30),
- determining a difference value by comparing the control input value to a reference value related to the functional temperature of the functional surface (22) of the functional module (20), and
- adjusting operation of the heater (30) to minimize the difference value.

2. The hair styling device (100) as claimed in claim 1, wherein the controller (50) is configured to control operation of the heater (30) by setting a level of electric power supply to the heater (30), and wherein the action of adjusting operation of the heater (30) involved in the feedback control algorithm is an action of adjusting the level of electric power supply to the heater (30).

3. The hair styling device (100) as claimed in claim 1 or 2, comprising a user interface (51) configured to enable a person using the hair styling device (100) to provide input to the controller (50) which determines the functional temperature of the functional surface (22) of the functional module (20).

4. The hair styling device (100) as claimed in claim 3, wherein the controller (50) is configured to set one of a discrete number of functional temperatures of the functional surface (22) of the functional module (20) in dependence on input received through the user interface (51).

5. The hair styling device (100) as claimed in any of claims 1-4, wherein the heater (30) is a thick film heater including a heater track (31) made of electrically resistive material.

6. The hair styling device (100) as claimed in claim 5, wherein the thick film heater (30) includes a conductor track (34) made of conductive material, which conductor track (34) is arranged and configured to enable application of voltage onto the heater track (31).

7. The hair styling device (100) as claimed in claim 5 or 6, wherein the thick film heater (30) includes a carrier (32) on which at least the heater track (31) is arranged.

8. The hair styling device (100) as claimed in any of claims 1-7, wherein the functional module (20) includes a tube-shaped element (21), and the functional surface (22) of the functional module (20) comprises at least a portion of an exterior surface (22) of the tube-shaped element (21).

9. The hair styling device (100) as claimed in claim 8 insofar as dependent on claim 7, wherein the carrier (32) of the thick film heater (30) comprises a sheet which is bent to a tube having a longitudinal slot (36), and wherein the thick film heater (30) is fitted inside the tube-shaped element (21) of the functional module (20).

10. The hair styling device (100) as claimed in claim 9, comprising a thermal fuse (40) which is configured to assume one of a default condition of enabling electric power supply to the heater (30) and a safety condition of disabling electric power supply to the heater (30), and a spring-loaded holder (41) arranged and configured to push the thermal fuse (40) against an interior surface (38) of the thick film heater (30).

11. The hair styling device (100) as claimed in claim 10, wherein the spring-loaded holder (41) is generally U-shaped.

12. The hair styling device (100) as claimed in any of claims 1-11, being a hair curler comprising a curling barrel as functional module (20), wherein the curling barrel comprises a tube-shaped element (21) for the hair to be wound about.
